# EUROPEAN PATENT SPECIFICATION

(11) **EP 4 442 790 B1**
(45) Date of publication and mention of the grant of the patent: **20.05.2026**
(21) Application number: 24167019.9
(22) Date of filing: 27.03.2024
(51) Int. Cl.: C09K 11/02, C09K 11/70, C09D 11/50, C09D 11/101

(54) **QUANTUM DOT COMPOSITION, METHOD OF PREPARING THE SAME, CURED PRODUCT THEREOF, AND DISPLAY DEVICE INCLUDING THE SAME**
QUANTENPUNKTZUSAMMENSETZUNG, VERFAHREN ZUR HERSTELLUNG DAVON, GEHÄRTETES PRODUKT DARAUS UND ANZEIGEVORRICHTUNG DAMIT
COMPOSITION DE POINTS QUANTIQUES, SON PROCÉDÉ DE PRÉPARATION, PRODUIT DURCI DE CELLE-CI ET DISPOSITIF D'AFFICHAGE COMPRENANT CELLE-CI

(30) Priority: 06.04.2023 KR 20230045555
(43) Date of publication of application: 09.10.2024
(73) Proprietor: Samsung Electronics Co., Ltd., Suwon-si, Gyeonggi-do 16677 (KR); Hansol Chemical Co., Ltd., Gangnam-gu Seoul 06169 (KR)
(72) Inventor: KOH, Sungjun, 16677 Suwon (KR); LEE, Daehee, 16677 Suwon (KR); MUN, Ilju, 16677 Suwon (KR); NAM, Kyoungmo, 06169 Seoul (KR); KANG, Hyunjin, 06169 Seoul (KR); KIM, Gilran, 06169 Seoul (KR); YOO, Sungmin, 06169 Seoul (KR); YU, Wonseok, 06169 Seoul (KR); YUN, Mihee, 06169 Seoul (KR); LEE, Euyjin, 06169 Seoul (KR)
(74) Representative: Appleyard Lees IP LLP

(56) References cited:
- US-A1- 2018 239 247
- US-A1- 2021 040 384
- US-A1- 2022 186 109

## Description

### BACKGROUND

### 1. Field

The disclosure relates to a quantum dot composition, a method of preparing the same, a cured product thereof, and a display device including the same, and more particularly, to a quantum dot composition for electrohydrodynamic inkjet printing, a method of preparing the same, a cured product thereof, and a display device including the same.

### 2. Description of the Related Art

Quantum dots (QDs), known as semiconductor nanocrystals, generate light of different wavelengths according to the particle size without a change in the type of material, thus producing various colors. QDs generally have higher color purity and light stability than existing luminophores, and thus have attracted attention as a next-generation light-emitting device.

In the display field, QDs are typically dispersed in a polymer matrix and can be applied in the form of a complex to various displays and electronic devices, in addition to TVs and LEDs. QDs, such as CdSe and InP, have undergone rapid development in terms of quantum yield, and synthesis methods that provide quantum yield of almost 100 % have been introduced. Consequently, TVs using QD sheets are currently being commercialized. As a next stage advancement, QD TVs that are self-emissive, not a filtering type, in a color filter layer of an existing LED TV by inclusion of QDs in the color filter layer (excluding pigments and dyes), are being developed. Development of these QD TVs is generally focused on how much the luminous efficiency of QDs can be maintained during a process and manufacturing process in which QDs form pixels.

Materials for color filters typically require high sensitivity, adhesion to a substrate, chemical resistance, heat resistance, and the like. Color filters applied to existing displays are generally formed through a patterning process in which a desired pattern is formed through an exposure process using a photomask using a photosensitive resist composition, and then non-exposed areas are dissolved and removed through a development process. However, this process can increase costs due to discarded materials.

Recently, to increase the quality of materials used in pixels and resolve the consequent increased cost, interest has been drawn in methods of decreasing the consumption of materials by using a material only in a target portion rather than patterning by existing spin coating or slit coating. The most representative method is an inkjet method, which may be largely classified into a bubble jet method and a piezo method. The inkjet method can use materials only for target pixels, and thus, avoid unnecessary waste of materials.

However, a QD composition used in the inkjet method is typically required to have a viscosity of 100 mPa.s (100 centipoise (cps)) or less, for example, 50 mPa.s (50 cps) or less, and due to the difficulty in applying a high-viscosity ink with a viscosity of greater than 100 mPa.s (100 cps).

To compensate for these shortcomings of the inkjet method, an electrohydrodynamic (EHD) inkjet method that enables fine patterning has been developed. The EHD inkjet method enables the atomization and printing of ink according to an electric field by applying an electric potential difference between an ink ejection nozzle and a substrate. For example, Korean Patent Application No. 10-2020-0137977 discloses a solution used in an electrohydrodynamic printing method. US 2021/040384 discloses a wavelength conversion member, backlight unit and image display device.

A need remains for QD materials with suitable light conversion efficiency adaptable to printing methods.

### SUMMARY

According to the present invention, there is provided a quantum dot composition according to claim 1, a use of the quantum dot composition according to claim 10, a method of preparing a quantum dot composition according to claim 11, a cured film according to claim 20, a light emitting device according to claim 21 and a display device according to claim 22. Provided are a quantum dot composition that has high viscosity suitable for an electrohydrodynamic (EHD) inkjet method, with good electrical conductivity, ejectability and inkjetting properties due to no occurrence of agglomeration between quantum dots, and a method of preparing the same.

Provided are a quantum dot composition that does not undergo agglomeration between quantum dots and exhibits excellent optical properties, and a method of preparing the same.

Provided are a cured product of the quantum dot composition and a display device including the quantum dot composition.

Additional aspects will be set forth in part in the description which follows and, in part, will be apparent from the description, or may be learned by practice of the presented embodiments of the disclosure.

According to the invention, a quantum dot composition includes quantum dots, a photopolymerizable monomer, and an oligomer,
wherein the oligomer includes a compound containing a carbon-carbon double bond and a compound containing a thiol group.

The oligomer includes at least two types of the compound containing a carbon-carbon double bond.

For example, the compound containing a carbon-carbon double bond may include one compound containing two or three carbon-carbon double bonds per molecule and one compound containing a carbon-carbon double bond per molecule.

For example, the compound containing a carbon-carbon double bond may include at least one compound containing a phenol group.

For example, the compound containing a thiol group may include two to four functional groups.

For example, the compound containing a carbon-carbon double bond may include triallyl isocyanurate and phenol acrylate, and the compound containing a thiol group may include ethylene glycol di(3-mercapto propionate).

For example, a molar ratio of the compound containing a carbon-carbon double bond to the compound containing a thiol group may be in a range of about 2.75:1 to about 5:1.

For example, a molar ratio of the compound containing two or three carbon-carbon double bond per molecule to the compound containing a carbon-carbon double bond per molecule may be in a range of about 0.01:1 to about 1.5:1.

For example, the carbon-carbon double bond may be at least one selected from a vinyl group, an allyl group, a (meth)acrylic group, an isopropenyl group, or a 2-butenyl group.

For example, the quantum dot composition may have a viscosity of about 200 mPa.s (200 cps) to 1,000 mPa.s (1,000 cps) at room temperature.

For example, the quantum dots may be surface-modified with a primary ligand represented by Formula 1 and a secondary ligand containing a carboxyl group and having 3 to 40 carbon atoms. 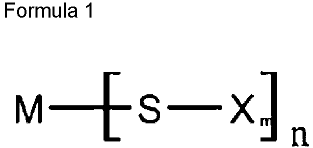 wherein, in Formula 1,
M may be a divalent to tetravalent metal,
m may be an integer from 1 to 4, X may independently be a C3-C20 organic group, and
n may be an integer from 2 to 4.

For example, the quantum dot composition may be used for electrohydrodynamic inkjet printing.

According to the invention, a method of preparing a quantum dot composition includes modifying a surface of quantum dots, and then dispersing the quantum dots in a photopolymerizable monomer to obtain a quantum dot dispersion, and mixing the quantum dot dispersion with an oligomer,
wherein the oligomer is prepared by mixing a compound containing a carbon-carbon double bond and a compound containing a thiol group.

The oligomer includes at least two types of the compound containing a carbon-carbon double bond.

For example, the compound containing a carbon-carbon double bond may include one compound containing two or three carbon-carbon double bonds per molecule and one compound containing a carbon-carbon double bond per molecule.

For example, the compound containing a carbon-carbon double bond may include at least one compound containing a phenol group.

For example, the compound containing a thiol group may include two to four functional groups.

For example, the compound containing a carbon-carbon double bond and the compound containing a thiol group may be mixed in a molar ratio of about 2.75:1 to about 5:1.

For example, the compound containing two or three carbon-carbon double bond per molecule and the compound containing a carbon-carbon double bond per molecule may be mixed in a molar ratio of about 0.01:1 to about 1.5:1.

For example, the modification of the surface of quantum dots may include performing primary surface modification by adding a primary ligand represented by Formula 1, and then performing secondary surface modification by adding a secondary ligand containing a carboxyl group and having 3 to 40 carbon atoms 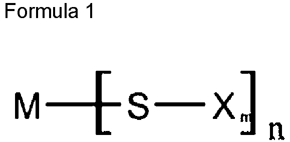 wherein, in Formula 1,
M may be a divalent to tetravalent metal,
m may be an integer from 1 to 4, X may independently be a C3-C20 organic group, and
n may be an integer from 2 to 4.

For example, the oligomer may further include a thermal initiator and a polymerization inhibitor, and before the oligomer is mixed with the quantum dot dispersion, the oligomer may be prepared through a polymerization reaction after stirring at room temperature.

For example, the method may further include further adding a photopolymerizable monomer, and adding a polymerization inhibitor, a photoinitiator, and a diffusing agent, followed by mixing.

According to the invention, a cured film is manufactured using the quantum dot composition wherein the compound containing a carbon-carbon double bond comprises at least one compound containing a phenol group.

According to the invention, a light-emitting device includes the quantum dot composition.

According to the invention, a display device includes the light-emitting device.

### BRIEF DESCRIPTION OF THE DRAWINGS

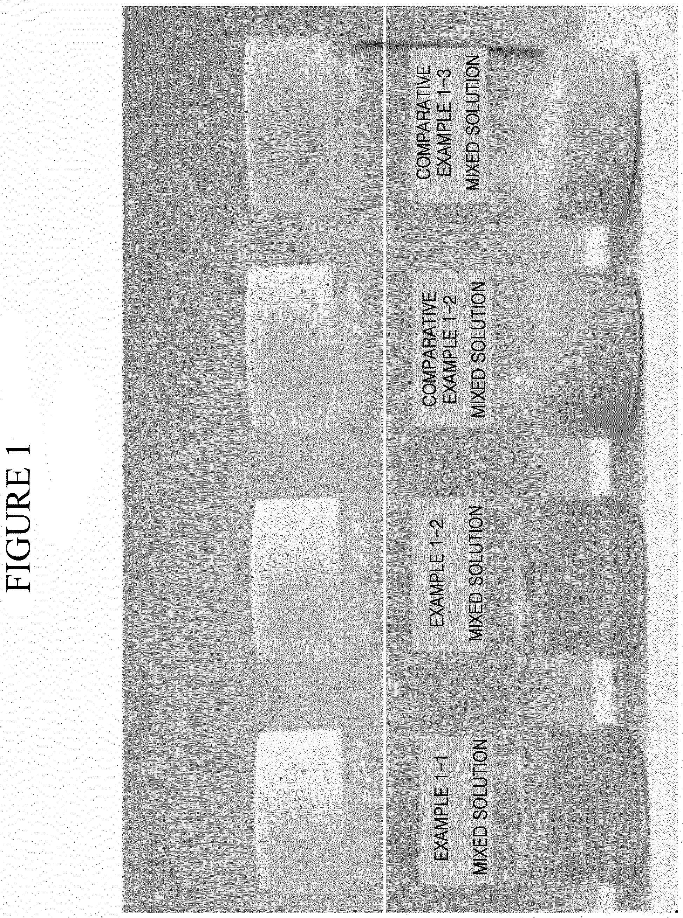

The above and other aspects, features, and advantages of certain embodiments of the disclosure will be more apparent from the following description taken in conjunction with the accompanying drawing, in which the Figure 1 illustrates dispersions obtained according to Experimental Example 1.

### DETAILED DESCRIPTION

The disclosure now will be described more fully hereinafter with reference to the accompanying drawing, in which various embodiments are shown. This disclosure may, however, be embodied in many different forms, and should not be construed as limited to the embodiments set forth herein. Rather, these embodiments are provided so that this disclosure will be thorough and complete, and will fully convey the scope of the invention to those skilled in the art. Like reference numerals refer to like elements throughout.

It will be understood that when an element is referred to as being "on" another element, it can be directly on the other element or intervening elements may be present therebetween. In contrast, when an element is referred to as being "directly on" another element, there are no intervening elements present.

It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element," "component," "region," "layer" or "section" discussed below could be termed a second element, component, region, layer or section without departing from the teachings herein.

The terminology used herein is for the purpose of describing particular embodiments only and is not intended to be limiting. As used herein, "a", "an," "the," and "at least one" do not denote a limitation of quantity, and are intended to include both the singular and plural, unless the context clearly indicates otherwise. For example, "an element" has the same meaning as "at least one element," unless the context clearly indicates otherwise. "At least one" is not to be construed as limiting "a" or "an." "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The terms "below" or "beneath" can, therefore, encompass both an orientation of above and below.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10% or 5% of the stated value.

Throughout the disclosure, the expression "at least one of a, b or c" indicates only a, only b, only c, both a and b, both a and c, both b and c, all of a, b, and c, or variations thereof.

Unless otherwise defined, all terms (including technical and scientific terms) used herein have the same meaning as commonly understood by one of ordinary skill in the art to which this disclosure pertains. Terms, such as those defined in commonly used dictionaries, will not be interpreted in an idealized or excessive sense unless otherwise defined clearly.

Throughout the specification, when a part is referred to as "including" a certain element, it means a case where the part may further include other elements, rather than precluding other elements, unless otherwise stated herein.

As used herein, the term "(meth)acrylate" refers to acrylate and methacrylate, the term "(meth)acrylic" refers to acrylic and methacrylic, and the term "(meth)acryloyl" refers to acryloyl and methacryloyl.

The terms "monomeric unit" and "monomer" as used herein have the same meaning. In the disclosure, monomers are distinguished from oligomers and polymers, and refer to compounds having a weight average molecular weight of 1,000 or less. The term "photopolymerizable monomer" as used herein refers to a group involved in a polymerization reaction, e.g., a (meth)acrylate group.

The term "substituted" as used herein means that hydrogen of a compound or a functional group is substituted with a substituent selected from a C1-C30 alkyl group, a C2-C30 alkenyl group, a C2-C30 alkynyl group, a C1-C30 alkoxy group, a C1-C30 heteroalkyl group, a C3-C30 heteroalkylaryl group, a C3-C30 cycloalkyl group, a C3-C15 cycloalkenyl group, a C6-C30 cycloalkynyl group, a C2-C30 heterocycloalkyl group, a halogen (-F, -Cl,-Br, or -I), a hydroxyl group (-OH), a nitro group (-NO₂), a cyano group (-CN), an ester group (-C(=O)OR, where R is a C1-C10 alkyl group or alkenyl group), an ether group (-O-R, where R is a C1-C10 alkyl group or alkenyl group), carbonyl (-C(=O)-R, where R is a C1-C10 alkyl group or alkenyl group), a carboxyl group (-COOH), and a combination thereof.

The term "organic group" as used herein refers to a linear or branched C1-C30 alkyl group, a linear or branched C2-C30 alkenyl group, or a linear or branched C2-C30 alkynyl group. The alkyl group, the alkenyl group, and the alkynyl group may each be substituted or unsubstituted.

The term "alkyl" as used herein refers to a monovalent substituent derived from a linear or branched saturated hydrocarbon having 1 to 40 carbon atoms. Examples thereof may include, but are not limited to, methyl, ethyl, propyl, isobutyl, sec-butyl, pentyl, iso-amyl, and hexyl. The term "alkylene group" as used herein refers to a divalent group having the same structure as the alkyl group derived from a linear or branched saturated hydrocarbon having 1 to 40 carbon atoms.

The term "alkenyl" as used herein refers to a monovalent substituent derived from a linear or branched unsaturated hydrocarbon that has at least one carbon-carbon double bond and 2 to 40 carbon atoms. Examples thereof may include, but are not limited to, vinyl, allyl, isopropenyl, and 2-butenyl. The term "alkenylene group" as used herein refers to a divalent group having the same structure as the alkenyl group derived from a linear or branched unsaturated hydrocarbon that has at least one carbon-carbon double bond and 2 to 40 carbon atoms.

Current materials for electrohydrodynamic inkjet printing generally require solvent evaporation to improve viscosity during forming of the QD-polymer resin. In addition, when the proportion of QDs is high, good light conversion efficiency may be obtained, but agglomeration between QDs occurs, and when the proportion of QDs is low, the light conversion efficiency deteriorates. When the ratio of QDs to polymer in the resin is adjusted to reduce agglomeration, an excessively large amount of polymer is required leading to weight ratios of about 1:100 to about 1:1000. Thus, the process of forming a QD-polymer resin can also require considerable time for stirring the QDs and a polymer.

To address these challenges, a quantum dot composition has been developed that has high viscosity suitable for an electrohydrodynamic (EHD) inkjet method, with good electrical conductivity, ejectability and inkjetting properties due to no occurrence of agglomeration between quantum dots, and a method of preparing the same.

### Quantum dot composition

A quantum dot composition according to the invention includes quantum dots, a photopolymerizable monomer, and an oligomer, wherein the oligomer includes a compound containing a carbon-carbon double bond and a compound containing a thiol group and wherein the oligomer comprises at least two types of the compound containing a carbon-carbon double bond.

The quantum dot composition according to an embodiment of the disclosure may be used for electrohydrodynamic inkjet printing, and have a viscosity of 5,000 mPa.s (5,000 cps) or less, for example, about 200 mPa.s (200 cps) to about 1,000 mPa.s (1,000 cps), for example, about 300 mPa.s (300 cps) to about 800 mPa.s (800 cps).

Hereinafter, the composition of the quantum dot composition will be described in detail as follows.

### Quantum dots

Quantum dots (QDs) are a nano-sized semiconductor material and may have different energy band gaps depending on the size and composition thereof, and thus may emit light of various emission wavelengths.

These QDs may have: a homogeneous single-layered structure, a multi-layered structure such as a core-shell structure, a gradient structure, or the like, or a mixed structure thereof. In the core-shell structure, the shell may be formed as multiple layers (e.g., core/shell/shell) in which respective layers may contain different components, for example, semi-metal oxides or metal oxides.

QDs may comprise a Group II-VI compound, a Group III-V compound, a Group IV-VI compound, a Group IV element, a Group IV compound, or a combination thereof. When QDs have a core-shell structure, the core and the shell may each be formed of the following listed components.

For example, the Group II-VI compound may be selected from: a binary compound selected from CdO, CdS, CdSe, CdTe, ZnO, ZnS, ZnSe, ZnTe, HgS, HgSe, HgTe, MgSe, MgS, and a mixture thereof; a ternary compound selected from CdSeS, CdSeTe, CdSTe, ZnSeS, ZnSeTe, ZnSTe, HgSeS, HgSeTe, HgSTe, CdZnS, CdZnSe, CdZnTe, CdHgS, CdHgSe, CdHgTe, HgZnS, HgZnSe, HgZnTe, MgZnSe, MgZnS, and a mixture thereof; and a quaternary compound selected from CdZnSeS, CdZnSeTe, CdZnSTe, CdHgSeS, CdHgSeTe, CdHgSTe, HgZnSeS, HgZnSeTe, HgZnSTe, and a mixture thereof.

For example, the Group III-V compound may be selected from: a binary compound selected from GaN, GaP, GaAs, GaSb, AIN, AlP, AlAs, AlSb, InN, InP, InAs, InSb, and a mixture thereof; a ternary compound selected from GaNP, GaNAs, GaNSb, GaPAs, GaPSb, AINP, AlNAs, AlNSb, AlPAs, AlPSb, InNP, InNAs, InNSb, InPAs, InPSb, and a mixture thereof; and a quaternary compound selected from GaAlNP, GaAlNAs, GaAlNSb, GaAlPAs, GaAlPSb, GalnNP, GalnNAs, GaInNSb, GalnPAs, GalnPSb, InAlNP, InAINAs, InAlNSb, InAlPAs, InAlPSb, and a mixture thereof.

For example, the group IV-VI compound may be selected from: a binary compound selected from SnS, SnSe, SnTe, PbS, PbSe, PbTe, and a mixture thereof; a ternary compound selected from SnSeS, SnSeTe, SnSTe, PbSeS, PbSeTe, PbSTe, SnPbS, SnPbSe, SnPbTe, and a mixture thereof; and a quaternary compound selected from SnPbSSe, SnPbSeTe, SnPbSTe, and a mixture thereof.

For example, the Group IV element may be selected from silicon (Si), germanium (Ge), and a mixture thereof. The Group IV compound may be a binary compound selected from SiC, SiGe, and a mixture thereof.

For example, an alloy-type compound may be a ternary compound selected from InZnP and the like.

The above-described binary compound, ternary compound or quaternary compound may be present in a particle at a uniform concentration, or may be present in the same particle in a concentration distribution divided into partially different states. In an embodiment, the QDs may have a core/shell structure in which one quantum dot surrounds another quantum dot. The interface between a core and a shell may have a concentration gradient in which the concentration of an element existing in the shell decreases towards the core.

The form of the QDs is not limited as long as it is a form commonly used in the art. For example, the QDs may be in the form of spherical, rod-shaped, pyramidal, multi-arm, or cubic nanoparticles, nanotubes, nanowires, nanofibers, or nanoplate particles.

The size of the QDs is not limited and may be adjusted within a range commonly known in the art. For example, the QDs may have an average particle diameter (D50) of about 2 nanometers (nm) to about 10 nm. As such, when the particle diameter of the QDs is controlled to be in a range of about 2 nm to about 10 nm, light of a desired color may be emitted. For example, when the particle diameter of InP-containing QD core/shell is in a range of about 5 nm to about 6 nm, light with a wavelength of about 520 nm to about 550 nm may be emitted, and when the particle diameter of InP-containing QD core/shell is in a range of about 7 nm to about 8 nm, light with a wavelength of about 620 nm to about 640 nm may be emitted. For example, non-cadmium (Cd)-based Group III-V QDs (e.g., InP, InGaP, InZnP, GaN, GaAs, or GaP) may be used as blue-emitting QDs.

The QDs may have a full width at half maximum (FWHM) of the emission wavelength spectrum of about 40 nm or less, and color purity or color reproducibility may be improved within this range. Light emitted through these QDs is emitted in all directions, and thus a wide viewing angle may be improved.

In an embodiment of the disclosure, the amount of the QDs may be in a range of about 1 weight percent (wt%) to about 60 wt%, for example, about 20 wt% to about 50 wt%, with respect to a total weight of the quantum dot composition depending on the desired characteristics of the QDs.

### Oligomer

In the quantum dot composition according to the disclosure, the oligomer comprises a compound containing a carbon-carbon double bond and a compound containing a thiol group. The oligomer comprises at least two types of the compound containing a carbon-carbon double bond, and may include, for example, one compound containing two or three carbon-carbon double bonds per molecule and one compound containing a carbon-carbon double bond per molecule.

When the oligomer includes the compound containing two or three carbon-carbon double bonds per molecule, the oligomer may have a molecular weight of about 20 grams per mole (g/mol) to about 1,000 g/mol, for example, about 200 g/mol to about 800 g/mol, for example, about 200 g/mol to about 500 g/mol. For example, triallyl isocyanurate or the like may be used.

In this regard, the compound containing a carbon-carbon double bond may include at least one compound containing a phenol group. For example, the compound containing a phenol group may be a compound containing a carbon-carbon double bond per molecule. In a post-process after a quantum dot composition is cured, ligands and the like on the surface of QDs are discharged in the form of gas (hereinafter, outgas), causing product defects such as the occurrence of cracks in a cured film, a light-emitting device, and a display device, poor lamination, and the like. However, when the oligomer includes at least one compound containing a phenol group, the production of outgas may be reduced. For example, phenol acrylate or the like may be used.

The compound containing a thiol group may include two to four functional groups, and may include, for example, two to four thiol groups, for example, two or three thiol groups, per molecule. For example, ethylene glycol di(3-mercapto propionate or the like may be used. Suitable functional groups include an ester (-C(=O)O-), an ether (-O-), a carbonyl (-C(=O)-), a carboxyl group (-C(=O)-OH), a sulfonyl (-SO2-), a sulfide (-S-), a sulfoxide (-SO-), an alkoxy group (CₙH₂ₙ₊₁O-), and a hydroxyl group (-OH).

A molar ratio of the compound containing a carbon-carbon double bond to the compound containing a thiol group may be in a range of about 2.75:1 to about 5:1, about 2.75:1 to about 4:1, or about 2.75:1 to about 3.5:1.

A molar ratio of the compound containing two or three carbon-carbon double bonds per molecule to the compound containing a carbon-carbon double bond per molecule may be in a range of about 0.01:1 to about 1.5:1, about 0.1:1 to about 1.5:1, or about 0.3:1 to about 1.2:1.

In the compound containing carbon-carbon double bond(s), the carbon-carbon double bonds may independently be at least one selected from an allyl group, a vinyl group, a (meth)acrylic group, an isopropenyl group, and a 2-butenyl group, but the disclosure is not limited thereto.

In an embodiment of the disclosure, the amount of the oligomer may be in a range of about 1 wt% to about 50 wt%, for example, about 10 wt% to about 45 wt%, with respect to the total weight of the quantum dot composition depending on the desired characteristics of the QDs.

### Ligand

In the quantum dot composition according to the disclosure, a ligand serves to modify the surface of the quantum dots. Dispersion of quantum dots in a photopolymerizable monomer can be limited due to the hydrophobic surface properties thereof, and thus, by modifying the surface of the quantum dots with an appropriate ligand, the miscibility of the quantum dots with a photopolymerizable monomer may be improved.

In an embodiment of the disclosure, the ligand may include a primary ligand represented by Formula 1 and a secondary ligand containing a carboxyl group and having 3 to 40 carbon atoms 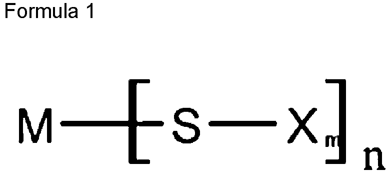
wherein, in Formula 1, M may be a divalent to tetravalent metal,
m may be an integer from 1 to 4, X may independently be a C3-C20 organic group, and
n may be an integer from 2 to 4.

The primary ligand may be a metal-thiol-based compound formed by reacting a metal salt and a thiol-based compound.

In the primary ligand, M may be a divalent to tetravalent metal. For example, M may be magnesium (Mg), calcium (Ca), scandium (Sc), titanium (Ti), vanadium (V), chromium (Cr), manganese (Mn), iron (Fe), cobalt (Co), nickel (Ni), copper (Cu), zinc (Zn), gallium (Ga), germanium (Ge), strontium (Sr), yttrium (Y), zirconium (Zr), niobium (Nb), molybdenum (Mo), technetium (Tc), ruthenium (Ru), rhodium (Rh), palladium (Pd), cadmium (Cd), indium (In), or tin (Sn), which are Groups 2 to 14 metals. In Formula 1, n may be determined depending on the valence of M, and may be an integer from 2 to 4.

X in Formula 1 may independently be an organic group having 3 to 20 carbon atoms. For example, X may be a C3-C20 alkylene group or alkenylene group containing at least one functional group selected from an ester (-C(=O)O-), an ether (-O-), a carbonyl (-C(=O)-), a carboxyl group (-C(=O)-OH), a sulfonyl (-SO2-), a sulfide (-S-), a sulfoxide (-SO-), an alkoxy group (CₙH₂ₙ₊₁O-), and a hydroxyl group (-OH). In other embodiments, X may be a C4-C20 organic group, including an ester ((-C(=O)O-) functional group.

The thiol group in the primary ligand may have affinity with the surface of the quantum dots, and thus may improve the dispersibility of the quantum dots in the photopolymerizable monomer. By including, in addition to a thiol group, an ester group, an ether group, a carbonyl group, a carboxyl group, an alkoxy group, a cycloalkyl group, or a hydroxyl group, the primary ligand may increase the dispersibility of surface-modified quantum dots in a polar monomer having hydrophobicity. The quantum dot composition including these quantum dots may have properties (e.g., low viscosity) suitable for a display process. Meanwhile, when a thiol-based compound having 3 or less carbon atoms is used, the surface modification of the quantum dots may be insufficient, and it may be difficult to disperse surface-modified quantum dots in a general solvent and monomer due to the high polarity thereof.

The secondary ligand may have 3 to 40 carbon atoms and contain a carboxyl group. In an embodiment of the disclosure, the secondary ligand may not include a thiol group.

In an embodiment of the disclosure, the secondary ligand may be represented by Formula 2.

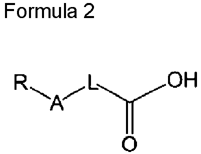

In Formula 2,
L may be a single bond, or may be selected from a substituted or unsubstituted C1-C20 alkylene group and a substituted or unsubstituted C1-C20 alkenylene group,
A may be a single bond, or may be a C1-C20 alkylene group or alkenylene group containing at least one functional group selected from an ester (-C(=O)O-), an ether (-O-), a carbonyl (-C(=O)-), a sulfonyl (-SO₂-), a sulfide (-S-), and a sulfoxide (-SO-), and
R may be hydrogen, or may be selected from a substituted or unsubstituted C1-C20 alkyl group and a substituted or unsubstituted C1-C20 alkenyl group.

For example, in the secondary ligand, A may include an ester (-C(=O)O-), an ether (-O-), or a combination thereof. A may be a C2-C15 alkylene group or an alkenylene group, for example, a C2-C10 alkylene or alkenylene group.

Generally, thiol-based ligands are known to have high reactivity with the surface of quantum dots. However, quantum dot compositions containing only thiol-based ligands are typically not suitable for use in inkjet compositions, due to harmful odors, or increased viscosity, resulting in reduced storage stability. The quantum dot composition according to the disclosure exhibits low viscosity and excellent storage stability by using the primary ligand, including a thiol-based ligand, and the secondary ligand not containing a thiol group. The secondary ligand may exhibit excellent dispersibility in the photopolymerizable monomer by including a functional group such as an ester(-C(=O)O-), an ether (-O-), a carbonyl (-C(=O)-), a carboxyl group (-C(=O)-OH), or the like. When the secondary ligand has 16 or more carbon atoms, the surface of quantum dots may not be modified, or the dispersibility of quantum dots in a general solvent and monomer may be reduced.

In an embodiment of the disclosure, a molar ratio of the primary ligand to the secondary ligand may be in a range of about 1:30 to about 20:1, for example, about 1:15 to about 10:1, for example, about 1:8 to about 5:1, but the disclosure is not limited thereto.

In an embodiment of the disclosure, a mixing ratio of the quantum dots to the ligand may be 1:1-20, for example, 1:1-10, for example, 1:5-10, on a weight ratio basis. The ligand represents the sum of the primary ligand and the secondary ligand.

### Photopolymerizable monomer

In the quantum dot composition, the photopolymerizable monomer can serve to control the overall crosslinking density of a formulation in which the quantum dots (QDs) are dispersed, i.e., a polymer matrix, thereby realizing the structure and overall physical properties of the matrix. The photopolymerizable monomer may improve flexibility and adhesion and attachability to other materials.

The photopolymerizable monomer may include a (meth)acrylate-based monomer. Any monomer that may be commonly used in the art may be used without limitation.

For example, the (meth)acrylate-based monomer may include at least one of a (meth)acrylic group, a vinyl group, or an allyl group. Non-limiting examples of photopolymerizable monomers include 1,6-hexanediol diacrylate, 1,6-cyclohexanediol diacrylate, 2,2-dimethyl-1,3-propanediol diacrylate, diethylene glycol diacrylate, dipropylene glycol diacrylate, 1,3-butylene glycol dimethacrylate, trimethylolpropane trimethacrylate, isobornyl acrylate, isobornyl methacrylate, tetrahydrofuryl acrylate, acryloyl morpholine, 2-phenoxyethyl acrylate, tripropylene glycol diacrylate, trimethylolpropane triacrylate, pentaerythritol mono(meth)acrylate, pentaerythritol di(meth)acrylate, pentaerythritol triacrylate, pentaerythritol trimethacrylate, dipentaerythritol hexaacrylate, and dipentaerythritol hexamethacrylate. These may be used alone or a mixture of at least two thereof may be used. For example, 1,6-hexanediol diacrylate as the photopolymerizable monomer may be suitable for achieving the viscosity properties of the quantum dot composition.

The amount of a (meth)acrylamide-based monomer may be in a range of about 1 wt% to about 50 wt%, for example, about 3 wt% to about 40 wt%, with respect to the total weight of the quantum dot composition depending on the desired characteristics of QDs.

### Photoinitiator

In the quantum dot composition, the photoinitiator is a component that is excited by a light source such as ultraviolet (UV) light and serves to initiate photopolymerization, and photopolymerization photoinitiators commonly used in the art may be used without limitation. For example, the photoinitiator may be an acetophenone-based compound, a benzophenone-based compound, a thioxanthone-based compound, a benzoin-based compound, a triazine-based compound, an oxime-based compound, or the like.

Non-limiting examples of suitable photoinitiators include ethyl(2,4,6-trimethylbenzoyl)phenylphosphinate, Irgacure 184, Irgacure 369, Irgacure 651, Irgacure 819, Irgacure 907, benzionalkylether, benzophenone, benzyl dimethyl katal, hydroxycyclohexyl phenyl acetone, chloroacetophenone, 1,1-dichloro acetophenone, diethoxy acetophenone, hydroxy acetophenone, 2-chloro thioxanthone, 2-ethylanthraquinone (2-ETAQ), 1-hydroxy-cyclohexyl-phenyl-ketone, 2-hydroxy-2- methyl-1-phenyl-1-propanone, 2-hydroxy-1-[4-(2-hydroxyethoxy)phenyl]-2-methyl-1-propanone, and methylbenzoylformate. These may be used alone or a mixture of at least two thereof may be used.

The amount of the photoinitiator may be adjusted within a range known in the art. For example, the amount of the photoinitiator may be in a range of about 0.01 wt% to about 10 wt%, for example, about 0.1 wt% to about 5 wt%, with respect to the total weight of the quantum dot composition. When the amount of the photoinitiator is within the above range, a photopolymerization reaction may be sufficiently performed without deterioration of the physical properties of the matrix.

### Diffusing agent

In the quantum dot composition, the diffusing agent may reflect light that is not adsorbed by a light conversion material, and allow the light conversion material to reabsorb the reflected light. The diffusing agent may increase light conversion efficiency by increasing the amount of light absorbed by the light conversion material.

Any diffusing agent component known in the art may be used as the diffusing agent without limitation. Such a diffusing agent may be a solid diffusing agent or a dispersion in which a diffusing agent is dispersed.

Non-limiting examples of suitable diffusing agents include barium sulfate (BaSO₄), calcium carbonate (CaCO₃), titanium dioxide (TiO₂), zirconia (ZrO₂), or a combination thereof. The average particle diameter or form of the diffusing agent is not limited, and may be selected within the configurations known in the art. For example, the diffusing agent may have an average particle diameter (D50) of about 150 nm to about 250 nm, for example, about 180 nm to about 230 nm. When the average particle diameter of the diffusing agent is within the above range, a superior light diffusion effect may be achieved, and light conversion efficiency may be increased.

The amount of the diffusing agent may be adjusted within a range known in the art. For example, the amount of the diffusing agent may be in a range of about 0.01 wt% to about 10 wt%, for example, about 0.1 wt% to about 5 wt%, with respect to the total weight of the quantum dot composition. When the amount of the diffusing agent is within the above range, the effect of improving light conversion efficiency may be achieved without deterioration of the physical properties of the matrix.

### Polymerization inhibitor

In the quantum dot composition, the polymerization inhibitor is a substance that reacts with radicals to form a low-reactivity radical or compound that cannot cause a polymerization reaction, and may control the rate of a photopolymerization reaction.

The polymerization inhibitor may be any material known in the art without limitation. For example, a quinone-based compound, a phenol- or aniline-based compound, and an aromatic nitro and nitroso compound may be used as polymerization inhibitors. Non-limiting examples of polymerization inhibitors include hydroquinone (HQ), methylhydroquinone (THQ), hydroquinone monomethyl ether (MEHQ), hydroquinone mono ethyl ether (EEHQ), 1,4-benzoquinone (BQ), 2,5-diphenylbenzoquinone (DPBQ), methyl-1,4-benzoquinone (MBQ), phenyl-1,4-benzoquinone (PBQ), 2,6-di-tert-butyl-4-methylphenol (BHT), 2,6-diphenyl-4-octadecyloxyphenol, catechol, phenocyazine, bis(α-methylbenzyl)phenocyazine, 3,7-dioctylphenocyazine, bis(α,α-dimethylbenzyl)phenocyazine, dimethyldithiocarbamic acid, diethyldithiocarbamic acid, dipropyldithiocarbamic acid, dibutyldithiocarbamic acid, and diphenyldithiocarbamic acid. These may be used alone or a mixture of at least two thereof may be used.

The amount of the polymerization inhibitor may be adjusted within a range known in the art. For example, the amount of the polymerization inhibitor may be in a range of about 0.01 wt% to about 2 wt%, for example, about 0.05 wt% to about 1 wt%, with respect to the total weight of the quantum dot composition.

### Other additives

In addition to the above-described components, the quantum dot composition may include additives known in the art without limitation within a range that does not adversely affect the effect of the disclosure. The amounts of the additives may be adjusted within ranges known in the art.

Non-limiting examples of suitable additives include a silane-based compound, a siloxane-based compound, an antioxidant, a polymerization inhibitor, a lubricant, a surface conditioner, a surfactant, an adhesion promoter, an anti-foaming agent, a slip agent, a solvent, a wetting agent, a light stabilizer, an antistain agent, a softener, a thickener, and a polymer. These may be used alone or a mixture of at least two thereof may be used.

A silane-based compound may serve to impart adhesion to a matrix, and a siloxane-based compound may serve to impart wetting properties. As these silane-based compounds and siloxane-based compounds, components known in the art may be used without limitation.

An antioxidant suppresses discoloration caused by heat or light irradiation and various oxidizing gases such as ozone, active oxygen, NOx, SOx (where x is an integer), and the like. In the disclosure, by adding an antioxidant, matrix coloration may be prevented or a decrease in film thickness by decomposition may be reduced. Non-limiting examples of suitable antioxidants include hydrazides, a hindered amine-based antioxidant, a nitrogen-containing heterocyclic mercapto-based compound, a thioether-based antioxidant, a hindered phenol-based antioxidant, ascorbic acids, zinc sulfate, thiocyanic acid salts, a thiourea derivative, sugars, a nitrite, a sulfite, a thiosulfate, and a hydroxylamine derivative.

A leveling agent may be included for the purpose of further increasing adhesion in the composition by leveling so that the quantum dot composition can be coated evenly and smoothly. The leveling agent may include an acrylic leveling agent, a silicone-based leveling agent, or the like alone, or a mixture of at least two thereof. For example, the leveling agent may include polyether-modified polydimethylsiloxane, and may include a (meth)acryloyl group added into the polyether chain.

A surfactant may be included to ensure miscibility and application uniformity of the quantum dot composition. As the surfactants, cationic, anionic, zwitterionic and non-ionic surfactants commonly known in the art may be used. For example, the surfactant may be at least one of a fluorine-based surfactant, a silicone-based surfactant, or a fluorosilicone-based surfactant.

A light stabilizer is an ultraviolet absorber and may have the effect of increasing the weather resistance of a matrix. A softener may alleviate the occurrence of cracks in a dried polymer matrix, and may improve impact resistance and bending resistance by alleviating the occurrence of cracks in a cured matrix.

### Method of preparing quantum dot composition

A method of preparing a quantum dot composition comprises modifying a surface of quantum dots, and then dispersing the quantum dots in a photopolymerizable monomer to thereby obtain a quantum dot dispersion, and mixing the quantum dot dispersion with an oligomer, wherein the oligomer is prepared by mixing a compound containing a carbon-carbon double bond and a compound containing a thiol group.

The method may include mixing the compound containing a carbon-carbon double bond and the compound containing a thiol group in a molar ratio of about 2.75:1 to about 5:1.

The oligomer comprises at least two types of the compound containing a carbon-carbon double bond, and may include one compound containing two or three carbon-carbon double bonds per molecule and one compound containing a carbon-carbon double bond per molecule, and the method may include mixing the compound containing two or three carbon-carbon double bonds per molecule and the compound containing a carbon-carbon double bond per molecule in a molar ratio of about 0.01:1 to about 1.5:1.

The oligomer may further include a thermal initiator and a polymerization inhibitor, and before the oligomer is mixed with the quantum dot dispersion, the oligomer may be prepared through a polymerization reaction after stirring at room temperature (about 25 °C).

The compound containing a carbon-carbon double bond and the compound containing a thiol group may be as described above in connection with the quantum dot composition.

The modification of the surface of quantum dots may include performing primary surface modification by adding a primary ligand represented by Formula 1, and then performing secondary surface modification by adding a secondary ligand containing a carboxyl group and having 3 to 40 carbon atoms 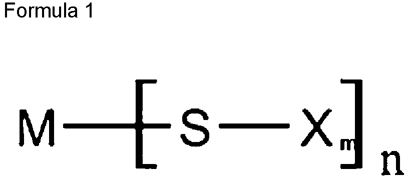 wherein, in Formula 1,
M may be a divalent to tetravalent metal,
m may be an integer from 1 to 4, X may independently be a C3-C20 organic group, and
n may be an integer from 2 to 4.

For example, quantum dots may be synthesized, and a primary ligand may be added to a solution including the synthesized quantum dots to cause primary surface modification, followed by centrifugation, to thereby obtain quantum dots having undergone the primary surface modification, and the quantum dots having undergone the primary surface modification may be dispersed in a photopolymerizable monomer, and then a secondary ligand containing a carboxyl group and having 3 to 40 carbon atoms may be added to perform secondary surface modification of the quantum dots.

The production of quantum dots may be performed by using methods known in existing many documents (e.g., a high-temperature injection method, a method using a microfluidic reactor, a method using microwave irradiation, and the like).

For the surface modification of quantum dots, a primary ligand may be added to a solution including synthesized quantum dots while the temperature of the solution is maintained at about 60 °C, followed by allowing a reaction to occur therebetween while stirring for about 30 minutes to about 3 hours, to perform primary surface modification of the quantum dots, and then a secondary ligand may be added thereto, followed by allowing a reaction to occur therebetween while stirring for about 30 minutes to about 3 hours, to perform secondary surface modification of the quantum dots.

The surface modification of quantum dots may be performed in two processes to prevent the formation of adducts due to a reaction between the primary ligand and the secondary ligand. In contrast, when the primary ligand and the secondary ligand are simultaneously added to the quantum dots, adducts may be formed due to a thiol-ene reaction between the thiol group of the primary ligand and the acrylate of the secondary ligand. These adducts may improve the viscosity of the quantum dot composition when the surface-modified quantum dots are dispersed in the photopolymerizable monomer.

After the quantum dots are surface-modified by the above-described method, the surface-modified quantum dots may be obtained through centrifugation. The quantum dot dispersion may be prepared by dispersing the obtained surface-treated quantum dots in the photopolymerizable monomer.

The method may further include further adding a photopolymerizable monomer to the quantum dot dispersion and the oligomer, and adding a polymerization inhibitor, a photoinitiator, and a diffusing agent thereto, followed by mixing.

### Cured product, light-emitting device, and display device

The disclosure provides a cured product including the above-described quantum dot composition wherein the compound containing a carbon-carbon double bond comprises at least one compound containing a phenol group. The cured product may have excellent optical properties and, for example, may have a light absorption rate of 85 % or more, for example, 90 % or more. The cured product may have a light conversion rate of 30 % or more, for example, 35 % or more.

The cured product may be manufactured by forming a pattern by applying the above-described quantum dot composition onto a substrate through an EHD inkjet spray method and curing the pattern.

The disclosure provides a light-emitting device including the above-described quantum dot composition. For example, a color filter is an optical component in the form of a thin film that extracts three colors, i.e., red, green, and blue, on a pixel basis from white light emitted from a backlight and allows the colors to be displayed on a liquid crystal display. Such a color filter may be manufactured by methods such as dyeing, pigment dispersion, printing, and electrodeposition. A color filter including the quantum dot composition may be manufactured by an inkjet method. In the inkjet method, a material may be used only for target pixels, and thus, unnecessary waste of materials may be prevented.

The disclosure also provides a display device including the above-described quantum dot composition. The display device may be a liquid crystal display (LCD) device, an electroluminescent (EL) display device, a plasma display (PDP) device, a field emission display (FED) device, or an organic light-emitting device (OLED), but the disclosure is not limited thereto.

Hereinafter, the disclosure will be described in more detail with reference to the following examples. However, the following examples are provided for illustrative purposes only and not intended to limit the scope of the disclosure.

### Preparation Example 1-1

### Preparation of primary ligand 1-1

1) Polyoxyethylene glycol methyl ether 400 [280 grams (g)) and mercaptosuccinic acid (50 g) were combined, the temperature was raised to 100 °C, and the reaction was allowed to proceed therebetween for 12 hours. After 12 hours, the reaction mixture was allowed to cool to room temperature, to provide bis-(methoxy polyoxyethylene glycol)mercaptosuccinate-400) (330 g).

2) Zinc chloride (ZnCl₂, 1.7 g) and bis-(methoxy polyoxyethylene glycol)mercaptosuccinate-400) (32 g) were added to hexyl acetate (134.5 g) in a round-bottomed flask, and then were dissolved therein while stirring at 60 °C. Then, the reaction mixture was placed under reduced pressure for 2 hours to remove the HCl byproduct, to complete the preparation of Zn-bis-(methoxy polyoxyethylene glycol)mercaptosuccinate-400) as a primary ligand.

### Preparation Example 1-2

### Preparation of primary ligand 1-2

Zinc chloride (ZnCl₂) and a compound represented by Formula A-1 were combined in a molar ratio of about 1:3 with hexyl acetate in a round-bottomed flask, and then were dissolved with stirring at approximately 60 °C. Then, the reaction mixture was placed under reduced pressure for 2 hours to remove the HCl byproduct, to complete the preparation of primary ligand 1-2.

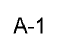

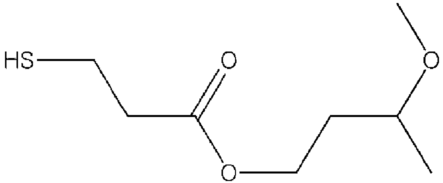

### Preparation Example 1-3

### Preparation of primary ligand 1-3

Primary ligand 1-3 was prepared in the same manner as in Preparation Example 1-2, except that a compound represented by Formula A-2 was used instead of the compound represented by Formula A-1.

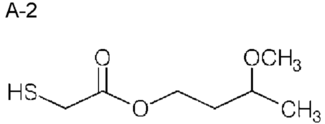

### Preparation Example 1-4

### Preparation of primary ligand 1-4

Primary ligand 1-4 was prepared in the same manner as in Preparation Example 1-2, except that a compound represented by Formula A-3 was used instead of the compound represented by Formula A-1.A-3

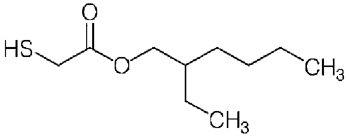

### Preparation Example 1-5

### Preparation of primary ligand 1-5

Primary ligand 1-5 was prepared in the same manner as in Preparation Example 1-2, except that a compound represented by Formula A-4 was used instead of the compound represented by Formula A-1.

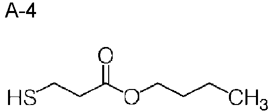

### Preparation Example 1-6

### Preparation of primary ligand 1-6

Primary ligand 1-6 was prepared in the same manner as in Preparation Example 1-2, except that a compound represented by Formula A-5 was used instead of the compound represented by Formula A-1.

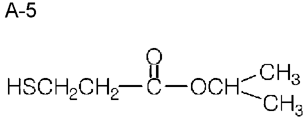

### Preparation Example 2-1

### Preparation of secondary ligand 2-1

A compound represented by Formula B-1 was added into hexyl acetate in a round flask, followed by stirring at room temperature for about 1 hour, to thereby complete the preparation of secondary ligand 2-1.

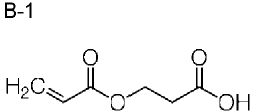

### Preparation Example 2-2

### Preparation of secondary ligand 2-2

Secondary ligand 2-2 was prepared in the same manner as in Preparation Example 2-1, except that a compound represented by Formula B-2 was used instead of the compound represented by Formula B-1.

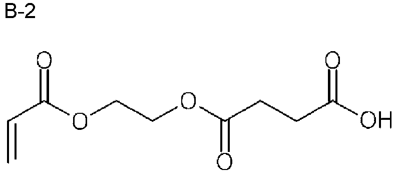

### Preparation Example 2-3

### Preparation of secondary ligand 2-3

Secondary ligand 2-3 was prepared in the same manner as in Preparation Example 2-1, except that a compound represented by Formula B-3 was used instead of the compound represented by Formula B-1.

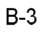

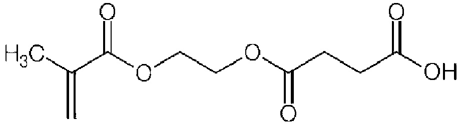

### Preparation Example 2-4

### Preparation of secondary ligand 2-4

Secondary ligand 2-4 was prepared in the same manner as in Preparation Example 2-1, except that a compound represented by Formula B-4 was used instead of the compound represented by Formula B-1.

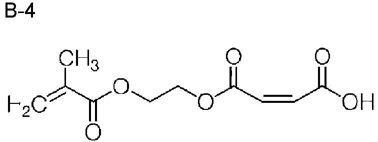

### Preparation Example 2-5

### Preparation of secondary ligand 2-5

Secondary ligand 2-5 was prepared in the same manner as in Preparation Example 2-1, except that a compound represented by Formula B-5 was used instead of the compound represented by Formula B-1.

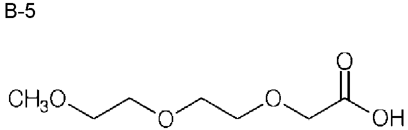

### Preparation Example 2-6

### Preparation of secondary ligand 2-6

Secondary ligand 2-6 was prepared in the same manner as in Preparation Example 2-1, except that a compound represented by Formula B-6 was used instead of the compound represented by Formula B-1.

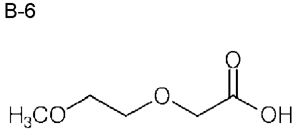

### Preparation Example 3

### Preparation of quantum dot (QD) dispersion

1) InZnP/ZnSe/ZnS (core/shell/shell) QD dispersion (750 milliliters (mL), Hansol, a QD solid content of 20 wt%, hexyl acetate) was heated up to about 60 °C and stirred in a nitrogen atmosphere. Zn-bis-(methoxy polyoxyethylene glycol)mercaptosuccinate-400) (9 g) as the prepared primary ligand 1-1 was added and the reaction mixture was stirred for about 2 hours, thereby performing primary surface modification of QDs.
2) Mono(2-acryloyloxyethyl) succinate (30 g) as the prepared secondary ligand 2-2 was added to a solution including the quantum dots having undergone the primary surface modification, the reaction mixture was stirred for about 2 hours, to perform secondary surface modification of the QDs.
3) A solution including the surface-modified QDs was centrifuged twice with cyclohexane to obtain QD powder, and then dispersed in 60 wt% of 1,6-hexanediol diacrylate (available from MIWON) to provide a QD dispersion.

### Preparation Example 4

### Preparation of oligomers

### Preparation Example 4-1. Preparation of oligomer A

1 part by weight of 2,2'-azobis(2,4-dimethylvaleronitrile) and 0.1 parts by weight of methylhydroquinone, with respect to 100 parts by weight of triallyl isocyanurate, were combined and dissolved together to provide crude solution A. 25 parts by weight of crude solution A, 50 parts by weight of phenoxyethyl acrylate, and 25 parts by weight of ethylene glycol di(3-mercapto propionate) were combined together and stirred at room temperature for 1 hour. After stirring, the reactor temperature was set to 80 °C, and oligomer A was prepared through oligomer polymerization.

### Preparation Example 4-2. Preparation of oligomer B

Oligomer B was prepared in the same manner as in Preparation Example 4-1, except that about 42.9 parts by weight of crude solution A prepared according to Preparation Example 4-1, about 28.6 parts by weight of phenoxyethyl acrylate, and about 28.6 parts by weight of ethylene glycol di(3-mercapto propionate) were used.

### Preparation Example 4-3. Preparation of oligomer C

Oligomer C was prepared in the same manner as in Preparation Example 4-1, except that about 29.2 parts by weight of crude solution A prepared according to Preparation Example 4-1, about 41.7 parts by weight of phenoxyethyl acrylate, and about 29.2 parts by weight of ethylene glycol di(3-mercapto propionate) were used.

### Preparation Example 4-4. Preparation of oligomer D

Oligomer D was prepared in the same manner as in Preparation Example 4-1, except that 20 parts by weight of crude solution A prepared according to Preparation Example 4-1, 40 parts by weight of phenoxyethyl acrylate, and 40 parts by weight of ethylene glycol di(3-mercapto propionate) were used.

### Preparation Example 4-5. Preparation of oligomer E

Oligomer E was prepared in the same manner as in Preparation Example 4-1, except that 50 parts by weight of crude solution A prepared according to Preparation Example 4-1, 25 parts by weight of phenoxyethyl acrylate, and 25 parts by weight of ethylene glycol di(3-mercapto propionate) were used.

### Example 1-1 Preparation of quantum dot composition

70 parts by weight of a surface-modified green QD dispersion (Hansol, QD polymer 60 wt%: 1,6-hexanediol diacrylate 40 wt%) and 17.5 parts by weight of oligomer A were mixed together, and then 5.4 parts by weight of 1,6-hexanediol diacrylate (available from MIWON), 0.1 parts by weight of methylhydroquinone, 2 parts by weight of ethyl (2,4,6-trimethylbenzoyl)phenylphosphinate as a photoinitiator, and 5 parts by weight of titanium dioxide as a diffusing agent were added to the reaction mixture and the reaction mixture was stirred together to provide a QD composition.

### Example 1-2

Example 1-2 was carried out in the same manner as in Example 1, except that oligomer B prepared according to Preparation Example 4-2 was used instead of oligomer A.

### Example 1-3

Example 1-3 was carried out in the same manner as in Example 1, except that oligomer C prepared according to Preparation Example 4-3 was used instead of oligomer A.

### Example 1-4

Example 1-4 was carried out in the same manner as in Example 1, except that oligomer D prepared according to Preparation Example 4-4 was used instead of oligomer A.

### Example 1-5

Example 1-5 was carried out in the same manner as in Example 1, except that oligomer E prepared according to Preparation Example 4-5 was used instead of oligomer A.

### Comparative Example 1-1

Comparative Example 1-1 was carried out in the same manner as in Example 1, except that 1,6-hexanediol diacrylate (available from MIWON) monomer was used instead of oligomer A.

### Comparative Example 1-2

Comparative Example 1-2 was carried out in the same manner as in Example 1, except that MIRAMER PU2042 (available from MIWON), which is an aliphatic urethane acrylate-based oligomer, was used instead of oligomer A.

### Comparative Example 1-3

Comparative Example 1-3 was carried out in the same manner as in Example 1, except that MIRAMER SC6300 (available from MIWON), which is an epoxy acrylate-based oligomer, was used instead of oligomer A.

### Example 2-1

46.5 parts by weight of a surface-modified red QD dispersion (Hansol, QD polymer 60 wt%: 1,6-hexanediol diacrylate 40 wt%) and 35.5 parts by weight of oligomer A were mixed together, and then 10.9 parts by weight of 1,6-hexanediol diacrylate, 0.1 parts by weight of methylhydroquinone, 2 parts by weight of ethyl (2,4,6-trimethylbenzoyl)phenylphosphinate as a photoinitiator, and 5 parts by weight of titanium dioxide as a diffusing agent were added to the reaction mixture and the reaction mixture was stirred together to provide a QD composition.

### Example 2-2

Example 2-2 was carried out in the same manner as in Example 2-1, except that oligomer B prepared according to Preparation Example 4-2 was used instead of oligomer A.

### Comparative Example 2-1

Comparative Example 2-1 was carried out in the same manner as in Example 2-1, except that 1,6-hexanediol diacrylate (available from MIWON) monomer was used instead of oligomer A.

The compositions of the examples and the comparative examples are summarized in Tables 1A and 1B.

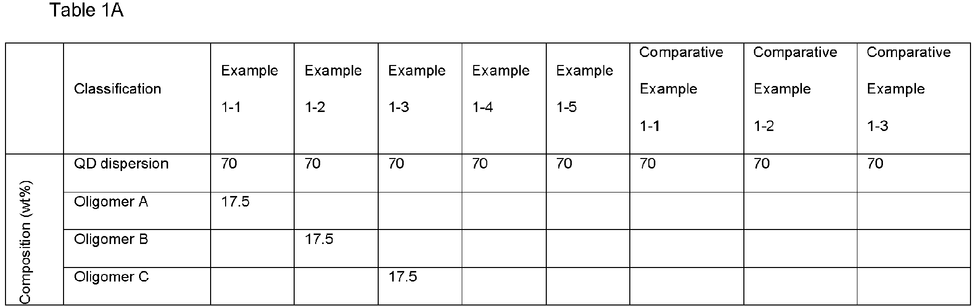

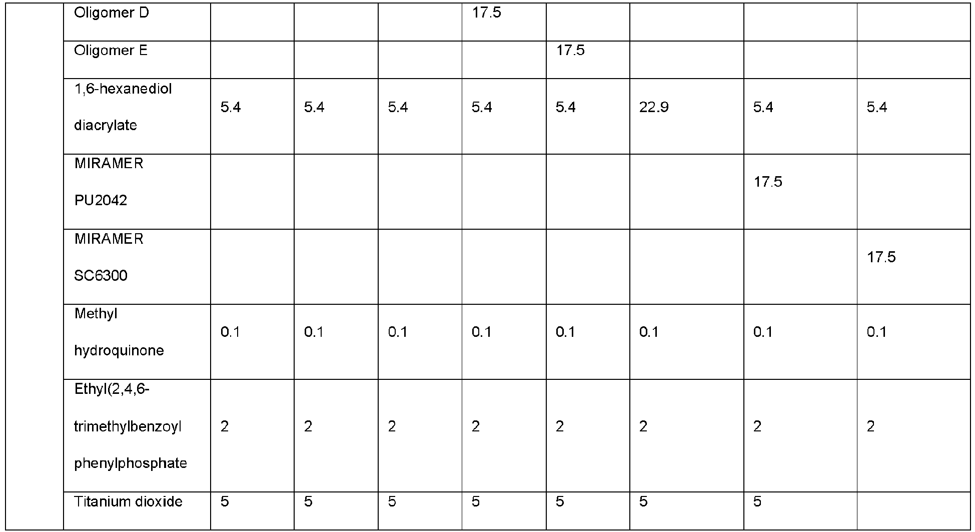

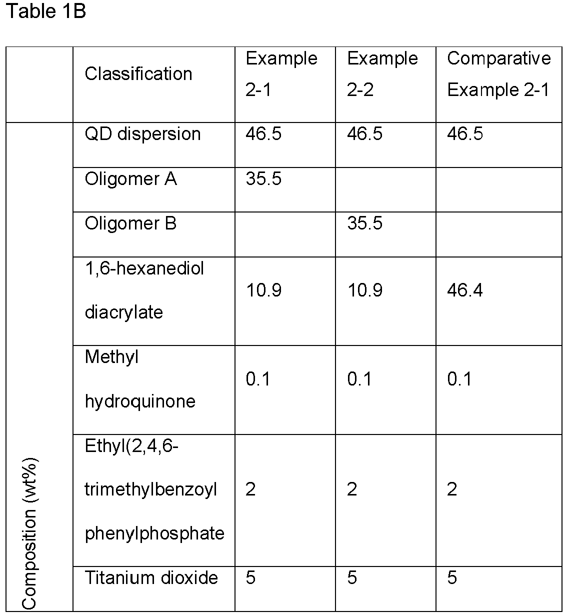

### Experimental Example 1. Evaluation of dispersibility and stability of QD dispersions and oligomer mixtures

For Examples 1-1 to 1-5, Examples 2-1 and 2-2, and Comparative Examples 1-2 and 1-3, including oligomers among the compositions, QD dispersions and only oligomer compositions were mixed to prepare mixed solutions. The results thereof are shown in Table 2 and the Figure 1.

**Table 2**

| Classification | Dispersibility / Stability |
|---|---|
| Example 1-1 Mixed solution | Good (transparent) |
| Example 1-2 Mixed solution | Good (transparent) |
| Example 1-3 Mixed solution | Cured |
| Example 1-4 Mixed solution | Cured |
| Example 1-5 Mixed solution | Agglomerated |
| Example 2-1 Mixed solution | Good (transparent) |
| Example 2-2 Mixed solution | Good (transparent) |
| Comparative Example 1-2 Mixed solution | Opaque |
| Comparative Example 1-3 Mixed solution | Opaque |

In each of the mixed solutions of Examples 1-1, 1-2, 2-1, and 2-2, the QD dispersion and the oligomer were uniformly dispersed due to good miscibility thereof, and each mixed solution was also shown to have excellent stability due to no occurrence of curing or agglomeration even after extended storage times.

In contrast, each of the mixed solutions of Examples 1-3 to 1-5 and Comparative Examples 1-2 and 1-3 showed poor dispersibility or stability. In Examples 1-3 and 1-4, thermal curing occurred even at room temperature and a part of each mixed solution hardened like plastic, and in Example 1-5, QDs and the oligomer were tangled and agglomerated with each other, resulting in decreased dispersibility. In Comparative Examples 1-2 and 1-3, phenomena such as curing or agglomeration did not occur, but each mixed solution appeared opaque due to poor overall miscibility.

As shown in the Figure 1, the mixed solutions of Examples 1-1 and 1-2 are transparent, whereas the mixed solutions of Comparative Examples 1-2 and 1-3 are opaque.

### Experimental Example 2. Evaluation of light conversion rate and light absorption rate of cured product of QDs

1) Each of the green QD compositions of Examples 1-1 and 1-2 and Comparative Examples 1-1 to 1-3, which showed good dispersibility and stability among the examples, were applied onto a 2 cm x 2 cm glass substrate to a thickness of approximately 10 micrometers (µm) with a spin coater (Mikasa, Opticoat MS-A150), followed by irradiation at 4,000 [millijoules per square centimeter (mJ/cm²)] using an LED curing machine with a wavelength of 395 nm, to manufacture a cured film. Subsequently, a 2 cm x 2 cm single film specimen was loaded in integrating sphere equipment (QE-2100, Otsuka Electronics) to measure an initial light absorption rate and a light conversion rate (QE) after curing. Then, post-baking was performed in a nitrogen atmosphere at 180 °C for 30 minutes, and then the light conversion rate (QE) was measured. The results thereof are shown in Table 3.

**Table 3**

| | Thickness (µm) | Light absorption rate (%) | Light conversion rate (after curing) (%) | Light conversion rate (after curing + heat treatment) (%) | Wavelength (nm) | Full width at half maximum (nm) |
|---|---|---|---|---|---|---|
| Example 1-1 | 10.2 | 88.5 | 36.2 | 36.1 | 540.1 | 33.3 |
| Example 1-2 | 10.2 | 87.6 | 36.5 | 35.6 | 539.6 | 33.4 |
| Comparative Example 1-1 | 10 | 87.4 | 32.9 | 32.8 | 540.1 | 33.5 |
| Comparative Example 1-2 | 10 | 86.9 | 30.7 | 29 | 540 | 33.6 |
| Comparative Example 1-3 | 10.1 | 86.6 | 27.6 | 25.9 | 539.8 | 33.4 |

The cured films manufactured according to Examples 1-1 and 1-2 and Comparative Examples 1-1 to 1-3 had almost uniform thicknesses within a range of 10 µm to 10.2 µm.

All the examples exhibited light absorption rates of 87 % or more and light conversion rates of 35 % or more, which demonstrated the excellent optical characteristics of the cured films.

In contrast, Comparative Examples 1-2 and 1-3 exhibited light absorption rates of less than 87 %. Although Comparative Example 1-1 had a light absorption rate of 87.4%, even Comparative Example 1-1 exhibited a lower light absorption rate than the examples. Comparative Example 1-1, which used the monomer instead of an oligomer, exhibited somewhat low optical properties, i.e., a light conversion rate of 32.8 %, and Comparative Examples 1-2 and 1-3 showed light conversion rates of 30.7 % and 27.6 %, even lower than that of Comparative Example 1-1, due to the poor dispersibility of the oligomers applied to Comparative Examples 1-2 and 1-3 in the QD dispersions.

The examples also maintained light conversion rates of 35 % or more after heat treatment, with changes of 0.1 % and 0.9 %, respectively, and exhibited rates of change before/after heat treatment of about 0.2 % and 2.4 %, respectively. The comparative examples exhibited decreases in light conversion rate of 0.1 %, 0.3 %, and 1.7 %, respectively, and exhibited rates of change before/after heat treatment of about 0.3 %, 0.9 %, and 6.2 %, respectively.

Thus, the excellent optical properties of Examples 1-1 and 1-2 were maintained well before/after heat treatment. When the compositions are applied to light-emitting devices, displays, and the like and commercialized, optical properties can be maintained for a longer period of time than the comparative examples materials.

2) Cured films were manufactured in the same manner as described above using the red QD compositions prepared according to Examples 2-1 and 2-2 and Comparative Example 2-1, and then the light absorption rates and light conversion rates of the cured films were measured. Heat treatment was performed in the same manner as described above, and then the light conversion rates were measured. The results thereof are shown in Table 4.

**Table 4**

| | Thickness (µm) | Light absorption rate (%) | Light conversion rate (after curing) (%) | Light conversion rate (after curing + heat treatment) (%) | Wavelength (nm) | Full width at half maximum (nm) |
|---|---|---|---|---|---|---|
| Example 2-1 | 10.1 | 90.1 | 39.4 | 39.3 | 647.7 | 38.5 |
| Example 2-2 | 10.1 | 90.0 | 39.5 | 39.1 | 648.1 | 38.8 |
| Comparative Example 2-1 | 10 | 88.9 | 35.0 | 36.3 | 648.0 | 38.5 |

The cured films manufactured according to Examples 2-1 and 2-2 and Comparative Example 2-1 had almost uniform thicknesses within a range of 10 µm to 10.1 µm.

All the examples exhibited light absorption rates of 90 % or more and light conversion rates of 39 % or more, which demonstrated the excellent optical characteristics of the cured films.

In contrast, Comparative Example 2-1 using the monomer instead of an oligomer had a light absorption rate of less than 90 % and a light conversion rate of 35 %, demonstrating less desirable optical characteristics in comparison to the examples.

The examples also maintained light conversion rates after heat treatment of 39 % or more, exhibiting changes of 0.1 % and 0.4 %, respectively, and exhibited rates of change before/after heat treatment of about 0.2 % and 1.0 %, respectively.

In the comparative example, although the light conversion rate after heat treatment slightly increased, the light conversion rate remained at a level of 36 %, and thus, the comparative example provided less desirable optical characteristics in comparison to the examples.

Taken together, the excellent optical properties of Examples 2-1 and 2-2 were maintained well before/after heat treatment. When the compositions are applied to light-emitting devices, displays, and the like and commercialized, optical properties can be maintained for a longer period of time than the comparative example materials.

### Experimental Example 3. Viscosity evaluation of QD compositions

The viscosities of the green QD compositions of Examples 1-1 and 1-2 and Comparative Examples 1-1 to 1-3 were measured. The viscosity was measured with a rotational rheometer (HAAKE MARS available from Thermo Scientific) at room temperature (25 °C).

The viscosities of the red QD compositions of Examples 2-1 and 2-2 and Comparative Example 2-1 were measured in the same manner as described above. The results thereof are shown in Table 5.

**Table 5**

| | Example 1-1 | Example 1-2 | Example 2-1 | Example 2-2 | Comparative Example 1-1 | Comparative Example 1-2 | Comparative Example 1-3 | Comparative Example 2-1 |
|---|---|---|---|---|---|---|---|---|
| Viscosity | 392 mPa.s (392 cps) | 417 mPa.s (417 cps) | 495 mPa.s (495 cps) | 734 mPa.s (734 cps) | 35 mPa.s (35 cps) | 561 mPa.s (561 cps) | 354 mPa.s (354 cps) | 22 mPa.s (22 cps) |
| (mPa.s (cps), 25 °C) | | | | | | | | |

The examples using the green QD compositions had viscosities of about 392 mPa.s (392 cps) and 417 mPa.s (417 cps), and the examples using the red QD compositions had viscosities of about 495 mPa.s (495 cps) and 734 mPa.s (734 cps). According, each QD composition has viscosity suitable for inkjet printing and EHD inkjet printing.

In contrast, Comparative Examples 1-1 and 2-1 using the monomers instead of oligomers had low viscosities, i.e., about 35 mPa.s (35 cps) and 22 mPa.s (22 cps), and thus, the QD compositions were not suitable for EHD inkjet printing.

Comparative Examples 1-2 and 1-3 using the oligomers had adequate viscosity, but in view of the results of Experimental Examples 1 and 2, practical application thereof may be limited.

### Experimental Example 4. Evaluation of electrohydrodynamic (EHD) inkjet printing (inkjetting properties)

The inkjetting properties (ejectability) of each of the green QD compositions of Examples 1-1 and 1-2 and Comparative Example 1-1 were measured. The EHD inkjetting properties were evaluated using iEHD printer (ENJET) equipment with a nozzle inner diameter of 75 µm.

The inkjetting properties of the red QD compositions of Examples 2-1 and 2-2 and Comparative Example 2-1 were measured in the same manner as described above. The results thereof are shown in Table 6.

**Table 6**

| | Example 1-1 | Example 1-2 | Example 2-1 | Example 2-2 | Comparative Example 1-1 | Comparative Example 1-2 | Comparative Example 1-3 | Comparative Example 2-1 |
|---|---|---|---|---|---|---|---|---|
| Inkjetting properties | Good | Good | Good | Good | Poor | Not performed | Not performed | Poor |

All the examples using green QD compositions exhibited a delta voltage of 1.4 kilovolts [(kV), -0.6 kV to -2 kV) without nozzle clogging, which indicates good EHD inkjet printing, and the examples using the red QD compositions also exhibited a delta voltage of 0.8 kV (-0.6 kV to -1.5 kV) without nozzle clogging, which indicates good EHD inkjet printing.

In contrast, Comparative Examples 1-1 and 2-1 using the monomers instead of oligomers exhibited low viscosity, and thus, it was found that jetting was not properly performed on a target area during EHD printing.

While Comparative Examples 1-2 and 1-3 using the oligomers were confirmed to show suitable viscosity due to jetting properties on the basis of the results of Experimental Example 3, taken together the results of Experimental Example 1, the compositions have high turbidity, and thus there is a possibility of precipitation of raw materials, and therefore, evaluation of jetting properties was not performed due to concerns about nozzle clogging.

It is obvious to those of ordinary skill in the art to which the disclosure pertains that the disclosure is not limited to the above-described embodiments, and various modifications or variations can be made without departing from the technical gist of the disclosure.

In the related art, it is difficult to prevent agglomeration between quantum dot particles and achieve excellent optical properties. However, a quantum dot composition according to the disclosure and a method of preparing the same can achieve these, and therefore, a manufacturing process is convenient and simplified, and costs can be saved.

The quantum dot composition according to the disclosure has good electrical conductivity and does not undergo agglomeration between particles, and thus has excellent ejectability and suitable viscosity as a quantum dot ink composition for EHD inkjet printing.

The quantum dot composition also has excellent transparency, and thus has excellent optical properties.

The quantum dot composition according to the disclosure may reduce out-gas emitted during curing, by a ligand and the like, and thus, the quality of a product manufactured therefrom may be improved.

## Claims

1. A quantum dot composition comprising quantum dots, a photopolymerizable monomer, and an oligomer,
wherein the oligomer comprises a compound containing a carbon-carbon double bond and a compound containing a thiol group and wherein the oligomer comprises at least two types of the compound containing a carbon-carbon double bond.

2. The quantum dot composition of claim 1, wherein the compound containing a carbon-carbon double bond comprises one compound containing two or three carbon-carbon double bonds per molecule and one compound containing a carbon-carbon double bond per molecule.

3. The quantum dot composition of claim 1, wherein the compound containing a carbon-carbon double bond comprises at least one compound containing a phenol group.

4. The quantum dot composition of claim 1, wherein the compound containing a thiol group comprises two to four functional groups.

5. The quantum dot composition of claim 1,
wherein the compound containing a carbon-carbon double bond comprises triallyl isocyanurate and phenol acrylate, and
the compound containing a thiol group comprises ethylene glycol di(3-mercapto propionate).

6. The quantum dot composition of claim 2, wherein a molar ratio of the compound containing a carbon-carbon double bond to the compound containing a thiol group is in a range of about 2.75:1 to about 5:1.

7. The quantum dot composition of claim 6, wherein a molar ratio of the compound containing two or three carbon-carbon double bonds per molecule to the compound containing a carbon-carbon double bond per molecule is in a range of about 0.01:1 to about 1.5:1.

8. The quantum dot composition of claim 1, wherein the carbon-carbon double bond comprises at least one selected from a vinyl group, an allyl group, a (meth)acrylic group, an isopropenyl group, or a 2-butenyl group.

9. The quantum dot composition of claim 1,
wherein the quantum dots are surface-modified with: a primary ligand represented by Formula 1; and
a secondary ligand containing a carboxyl group and having 3 to 40 carbon atoms 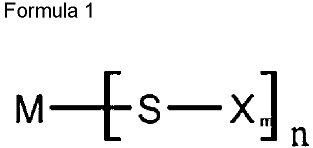 wherein, in Formula 1,
M is a divalent to tetravalent metal,
m is an integer from 1 to 4, X is independently a C3-C20 organic group, and
n is an integer from 2 to 4.

10. Use of the quantum dot composition of claim 1 for electrohydrodynamic inkjet printing.

11. A method of preparing a quantum dot composition, the method comprising modifying a surface of quantum dots, and then dispersing the quantum dots in a photopolymerizable monomer to thereby obtain a quantum dot dispersion, and mixing the quantum dot dispersion with an oligomer,
wherein the oligomer is prepared by mixing a compound containing a carbon-carbon double bond and a compound containing a thiol group and wherein the oligomer comprises at least two types of the compound containing a carbon-carbon double bond.

12. The method of claim 11, wherein the compound containing a carbon-carbon double bond comprises one compound containing two or three carbon-carbon double bonds per molecule and one compound comprising a carbon-carbon double bond per molecule.

13. The method of claim 11, wherein the compound containing a carbon-carbon double bond comprises at least one compound containing a phenol group.

14. The method of claim 11, wherein the compound containing a thiol group comprises two to four functional groups.

15. The method of claim 11, wherein the compound containing a carbon-carbon double bond and the compound containing a thiol group are mixed in a molar ratio of about 2.75:1 to about 5:1.

16. The method of claim 12, wherein the compound containing two or three carbon-carbon double bond per molecule and the compound containing a carbon-carbon double bond per molecule are mixed in a molar ratio of about 0.01:1 to about 1.5:1.

17. The method of claim 11, wherein the modification of the surface of quantum dots comprises performing primary surface modification by adding a primary ligand represented by Formula 1, and then performing secondary surface modification by adding a secondary ligand containing a carboxyl group and having 3 to 40 carbon atoms: 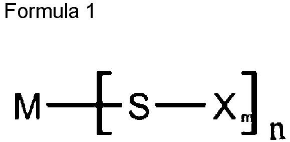 wherein, in Formula 1,
M is a divalent to tetravalent metal,
m is an integer from 1 to 4, X is independently a C3-C20 organic group, and
n is an integer from 2 to 4.

18. The method of claim 11,
wherein the oligomer further comprises a thermal initiator and a polymerization inhibitor,
and before the oligomer is mixed with the quantum dot dispersion, the oligomer is prepared through a polymerization reaction after stirring at room temperature.

19. The method of claim 11, further comprising further adding a photopolymerizable monomer, and adding a polymerization inhibitor, a photoinitiator, and a diffusing agent thereto, followed by mixing.

20. A cured film manufactured using the quantum dot composition according to claim 3, for example wherein the compound containing a phenol group is phenol acrylate.

21. A light-emitting device comprising the quantum dot composition according to claim 1.

22. A display device comprising the light-emitting device according to claim 21.

## Patentansprüche

1. Quantenpunktzusammensetzung, umfassend Quantenpunkte, ein photopolymerisierbares Monomer und ein Oligomer,
wobei das Oligomer eine Verbindung, die eine Kohlenstoff-Kohlenstoff-Doppelbindung enthält, und eine Verbindung, die eine Thiolgruppe enthält, umfasst und wobei das Oligomer mindestens zwei Arten der Verbindung, die eine Kohlenstoff-Kohlenstoff-Doppelbindung enthält, umfasst.

2. Quantenpunktzusammensetzung nach Anspruch 1, wobei die Verbindung, die eine Kohlenstoff-Kohlenstoff-Doppelbindung enthält, eine Verbindung, die zwei oder drei Kohlenstoff-Kohlenstoff-Doppelbindungen pro Molekül enthält, und eine Verbindung, die eine Kohlenstoff-Kohlenstoff-Doppelbindung pro Molekül enthält, umfasst.

3. Quantenpunktzusammensetzung nach Anspruch 1, wobei die Verbindung, die eine Kohlenstoff-Kohlenstoff-Doppelbindung enthält, mindestens eine Verbindung umfasst, die eine Phenolgruppe enthält.

4. Quantenpunktzusammensetzung nach Anspruch 1, wobei die Verbindung, die eine Thiolgruppe enthält, zwei bis vier funktionelle Gruppen umfasst.

5. Quantenpunktzusammensetzung nach Anspruch 1,
wobei die Verbindung, die eine Kohlenstoff-Kohlenstoff-Doppelbindung enthält, Triallylisocyanurat und Phenolacrylat umfasst und
die Verbindung, die eine Thiolgruppe enthält, Ethylenglykol-bis(3-mercaptopropionat) umfasst.

6. Quantenpunktzusammensetzung nach Anspruch 2, wobei ein Molverhältnis der Verbindung, die eine Kohlenstoff-Kohlenstoff-Doppelbindung enthält, zu der Verbindung, die eine Thiolgruppe enthält, in einem Bereich von etwa 2,75:1 bis etwa 5:1 liegt.

7. Quantenpunktzusammensetzung nach Anspruch 6, wobei ein Molverhältnis der Verbindung, die zwei oder drei Kohlenstoff-Kohlenstoff-Doppelbindungen pro Molekül enthält, zu der Verbindung, die eine Kohlenstoff-Kohlenstoff-Doppelbindung pro Molekül enthält, in einem Bereich von etwa 0,01:1 bis etwa 1,5:1 liegt.

8. Quantenpunktzusammensetzung nach Anspruch 1, wobei die Kohlenstoff-Kohlenstoff-Doppelbindung mindestens eine ausgewählt aus einer Vinylgruppe, einer Allylgruppe, einer (Meth)acrylgruppe, einer Isopropenylgruppe oder einer 2-Butenylgruppe umfasst.

9. Quantenpunktzusammensetzung nach Anspruch 1,
wobei die Quantenpunkte oberflächenmodifiziert sind mit: einem primären Liganden, dargestellt durch Formel 1; und
einem sekundären Liganden, der eine Carboxylgruppe enthält und 3 bis 40 Kohlenstoffatome aufweist, 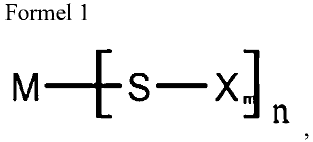 wobei in Formel 1
M ein zwei- bis vierwertiges Metall ist,
m eine Ganzzahl von 1 bis 4 ist, X unabhängig eine organische C3-C20-Gruppe ist und
n eine Ganzzahl von 2 bis 4 ist.

10. Verwendung der Quantenpunktzusammensetzung nach Anspruch 1 für elektrohydrodynamischen Tintenstrahldruck.

11. Verfahren zum Herstellen einer Quantenpunktzusammensetzung, wobei das Verfahren das Modifizieren einer Oberfläche von Quantenpunkten und dann das Dispergieren der Quantenpunkte in einem photopolymerisierbaren Monomer, um dadurch eine Quantenpunkt-Dispersion zu erhalten, und das Mischen der Quantenpunkt-Dispersion mit einem Oligomer umfasst,
wobei das Oligomer durch Mischen einer Verbindung, die eine Kohlenstoff-Kohlenstoff-Doppelbindung enthält, und einer Verbindung, die eine Thiolgruppe enthält, hergestellt wird, und wobei das Oligomer mindestens zwei Arten der Verbindung, die eine Kohlenstoff-Kohlenstoff-Doppelbindung enthält, umfasst.

12. Verfahren nach Anspruch 11, wobei die Verbindung, die eine Kohlenstoff-Kohlenstoff-Doppelbindung enthält, eine Verbindung, die zwei oder drei Kohlenstoff-Kohlenstoff-Doppelbindungen pro Molekül enthält, und eine Verbindung, die eine Kohlenstoff-Kohlenstoff-Doppelbindung pro Molekül umfasst, umfasst.

13. Verfahren nach Anspruch 11, wobei die Verbindung, die eine Kohlenstoff-Kohlenstoff-Doppelbindung enthält, mindestens eine Verbindung, die eine Phenolgruppe enthält, umfasst.

14. Verfahren nach Anspruch 11, wobei die Verbindung, die eine Thiolgruppe enthält, zwei bis vier funktionelle Gruppen umfasst.

15. Verfahren nach Anspruch 11, wobei die Verbindung, die eine Kohlenstoff-Kohlenstoff-Doppelbindung enthält, und die Verbindung, die eine Thiolgruppe enthält, in einem Molverhältnis von etwa 2,75:1 bis etwa 5:1 gemischt werden.

16. Verfahren nach Anspruch 12, wobei die Verbindung, die zwei oder drei Kohlenstoff-Kohlenstoff-Doppelbindungen pro Molekül enthält, und die Verbindung, die eine Kohlenstoff-Kohlenstoff-Doppelbindung pro Molekül enthält, in einem Molverhältnis von etwa 0,01:1 bis etwa 1,5:1 gemischt werden.

17. Verfahren nach Anspruch 11, wobei die Modifizierung der Oberfläche von Quantenpunkten das Durchführen einer primären Oberflächenmodifizierung durch Zugeben eines primären Liganden, der durch Formel 1 dargestellt wird, und dann das Durchführen einer sekundären Oberflächenmodifizierung durch Zugeben eines sekundären Liganden, der eine Carboxylgruppe enthält und 3 bis 40 Kohlenstoffatome aufweist, umfasst: 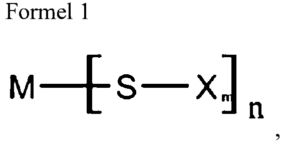 wobei in Formel 1
M ein zwei- bis vierwertiges Metall ist,
m eine Ganzzahl von 1 bis 4 ist, X unabhängig eine organische C3-C20-Gruppe ist und
n eine Ganzzahl von 2 bis 4 ist.

18. Verfahren nach Anspruch 11,
wobei das Oligomer ferner einen thermischen Initiator und einen Polymerisationshemmer umfasst
und, bevor das Oligomer mit der Quantenpunkt-Dispersion gemischt wird, das Oligomer nach Rühren bei Raumtemperatur durch eine Polymerisationsreaktion hergestellt wird.

19. Verfahren nach Anspruch 11, ferner umfassend das weitere Zugeben eines photopolymerisierbaren Monomers und das Zugeben eines Polymerisationshemmers, eines Photoinitiators und eines Diffusionsmittels dazu, gefolgt von Mischen.

20. Gehärteter Film, hergestellt unter Verwendung der Quantenpunktzusammensetzung nach Anspruch 3, wobei beispielsweise die Verbindung, die eine Phenolgruppe enthält, Phenolacrylat ist.

21. Lichtemittierende Vorrichtung, umfassend die Quantenpunktzusammensetzung nach Anspruch 1.

22. Anzeigevorrichtung, umfassend die lichtemittierende Vorrichtung nach Anspruch 21.

## Revendications

1. Composition de points quantiques comprenant des points quantiques, un monomère photopolymérisable et un oligomère,
dans laquelle l'oligomère comprend un composé contenant une double liaison carbone-carbone et un composé contenant un groupe thiol et dans laquelle l'oligomère comprend au moins deux types du composé contenant une double liaison carbone-carbone.

2. Composition de points quantiques de la revendication 1, dans laquelle le composé contenant une double liaison carbone-carbone comprend un composé contenant deux ou trois doubles liaisons carbone-carbone par molécule et un composé contenant une double liaison carbone-carbone par molécule.

3. Composition de points quantiques de la revendication 1, dans laquelle le composé contenant une double liaison carbone-carbone comprend au moins un composé contenant un groupe phénol.

4. Composition de points quantiques de la revendication 1, dans laquelle le composé contenant un groupe thiol comprend deux à quatre groupes fonctionnels.

5. Composition de points quantiques de la revendication 1,
dans laquelle le composé contenant une double liaison carbone-carbone comprend de l'isocyanurate de triallyle et de l'acrylate de phénol, et
le composé contenant un groupe thiol comprend du di(3-mercaptopropionate) d'éthylène glycol.

6. Composition de points quantiques de la revendication 2, dans laquelle un rapport molaire du composé contenant une double liaison carbone-carbone au composé contenant un groupe thiol est compris dans une plage allant d'environ 2,75:1 à environ 5:1.

7. Composition de points quantiques de la revendication 6, dans laquelle un rapport molaire du composé contenant deux ou trois doubles liaisons carbone-carbone par molécule au composé contenant une double liaison carbone-carbone par molécule est compris dans une plage allant d'environ 0,01:1 à environ 1,5:1.

8. Composition de points quantiques de la revendication 1, dans laquelle la double liaison carbone-carbone comprend au moins l'un choisi parmi un groupe vinyle, un groupe allyle, un groupe (méth)acrylique, un groupe isopropényle ou un groupe 2-butényle.

9. Composition de points quantiques de la revendication 1,
dans laquelle les points quantiques sont modifiés en surface par : un ligand primaire représenté par la Formule 1 ; et
un ligand secondaire contenant un groupe carboxyle et comportant 3 à 40 atomes de carbone 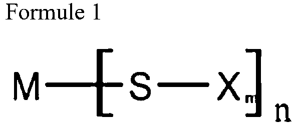 où, dans la Formule 1,
M est un métal divalent à tétravalent ;
m est un entier de 1 à 4, X est indépendamment un groupe organique en C3-C20, et
n est un entier de 2 à 4.

10. Utilisation de la composition de points quantiques de la revendication 1 pour une impression par jet d'encre électrohydrodynamique.

11. Procédé de préparation d'une composition de points quantiques, le procédé comprenant la modification d'une surface de points quantiques, puis la dispersion des points quantiques dans un monomère photopolymérisable pour obtenir ainsi une dispersion de points quantiques, et le mélange de la dispersion de points quantiques avec un oligomère,
dans lequel l'oligomère est préparé en mélangeant un composé contenant une double liaison carbone-carbone et un composé contenant un groupe thiol et dans lequel l'oligomère comprend au moins deux types du composé contenant une double liaison carbone-carbone.

12. Procédé de la revendication 11, dans lequel le composé contenant une double liaison carbone-carbone comprend un composé contenant deux ou trois doubles liaisons carbone-carbone par molécule et un composé comprenant une double liaison carbone-carbone par molécule.

13. Procédé de la revendication 11, dans lequel le composé contenant une double liaison carbone-carbone comprend au moins un composé contenant un groupe phénol.

14. Procédé de la revendication 11, dans lequel le composé contenant un groupe thiol comprend deux à quatre groupes fonctionnels.

15. Procédé de la revendication 11, dans lequel le composé contenant une double liaison carbone-carbone et le composé contenant un groupe thiol sont mélangés dans un rapport molaire d'environ 2,75:1 à environ 5:1.

16. Procédé de la revendication 12, dans lequel le composé contenant deux ou trois doubles liaisons carbone-carbone par molécule et le composé contenant une double liaison carbone-carbone par molécule sont mélangés dans un rapport molaire d'environ 0,01:1 à environ 1,5:1.

17. Procédé de la revendication 11, dans lequel la modification de la surface de points quantiques comprend la réalisation d'une modification de surface primaire en ajoutant un ligand primaire représenté par la Formule 1, puis la réalisation d'une modification de surface secondaire en ajoutant un ligand secondaire contenant un groupe carboxyle et comportant 3 à 40 atomes de carbone : 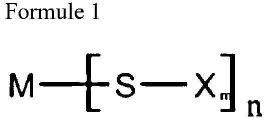 où, dans la Formule 1,
M est un métal divalent à tétravalent ;
m est un entier de 1 à 4, X est indépendamment un groupe organique en C3-C20, et
n est un entier de 2 à 4.

18. Procédé de la revendication 11,
dans lequel l'oligomère comprend en outre un initiateur thermique et un inhibiteur de polymérisation,
et avant le mélange de l'oligomère avec la dispersion de points quantiques, l'oligomère est préparé par une réaction de polymérisation après agitation à température ambiante.

19. Procédé de la revendication 11, comprenant en outre l'ajout d'un monomère photopolymérisable, et l'ajout d'un inhibiteur de polymérisation, d'un photoinitiateur et d'un agent de diffusion à celui-ci, suivi d'un mélange.

20. Film durci fabriqué en utilisant la composition de points quantiques selon la revendication 3, par exemple dans lequel le composé contenant un groupe phénol est l'acrylate de phénol.

21. Dispositif électroluminescent comprenant la composition de points quantiques selon la revendication 1.

22. Dispositif d'affichage comprenant le dispositif électroluminescent selon la revendication 21.
